# EUROPÄISCHE PATENTSCHRIFT

(11) **EP 0 780 258 B1**
(45) Veröffentlichungstag und Bekanntmachung des Hinweises auf die Patenterteilung: **05.03.2003**
(21) Anmeldenummer: 96119720.9
(22) Anmeldetag: 09.12.1996
(51) Int. Cl.: B60M 1/12, B60M 1/234

(54) **Vorrichtung zur Halterung eines von einem Stromabnehmer beschliffenen Teils einer Fahrleitungsanlage**
Hanging device for a part of an overhead supply line being in contact with the current collector
Dispositif d'attache d'une partie d'installation d'alimentation aérienne de véhicule, en contact avec le collecteur de courant

(30) Priorität: 21.12.1995 DE 19548103
(43) Veröffentlichungstag der Anmeldung: 25.06.1997
(73) Patentinhaber: SIEMENS AKTIENGESELLSCHAFT, 80333 München (DE)
(72) Erfinder: Müller-Gerlach, Peter, Dipl.-Ing., 75217 Birkenfeld (DE)

(56) Entgegenhaltungen:
- DE-A- 19 517 806
- US-A- 2 095 777
- US-A- 4 230 209

## Beschreibung

Die Erfindung betrifft eine Vorrichtung zur Halterung eines von einem Stromabnehmer beschliffenen Teils einer Fahrleitungsanlage, das mit einem Halteelement in Verbindung steht, welches durch Wenigstens ein Federelement in seiner Bewegung abgefedert ist. Eine solche Vorrichtung ist z.B. durch die US-A-4,230,209 bekannt.

Zu den von Stromabnehmern beschliffenen Teilen einer Fahrleitungsanlage zählen z.B. Leitkufen von Streckentrennern sowie Oberleitungskontakte und Deckenstromschienen. Leitkufen überbrücken die Trennstelle eines Streckentrenners und sind mit einem der beiden Funkenhörner eines Funkenhornpaares elektrisch leitend verbunden. Oberleitungskontakte sind Tragbügel, die isoliert am Fahrdraht befestigt sind und bei Berührung durch den Stromabnehmer Signale, Weichen und andere Einrichtungen schalten. Beim Befahren derartiger Teile tritt Funkenbildung auf, die zur Vergrößerung des elektrischen Abriebs führt. Bei Deckenstromschienen kann es insbesondere beim Befahren der Übergangs abschnitte zu Funkenbildungen kommen.

Aufgabe der vorliegenden Erfindung ist es, eine Vorrichtung der eingangs genannten Art zu schaffen, welche die beim Befahren auftretende Funkenbildung sowie die damit beim beschliffenen Teil und beim Stromabnehmer verbundenen Verschleißerscheinungen reduziert.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Die erfindungsgemäße Vorrichtung umfaßt ein Halteelement, in dem das vom Stromabnehmer beschliffene Teil (z.B. Leitkufe, Oberleitungskontakt, Deckenstromschiene) befestigbar ist, wobei das Halteelement vertikal geführt und durch wenigstens ein Federelement in seiner Bewegung abgefedert ist. Die vertikale Führung des Halteelementes kann hierbei z.B. vom Federelement übernommen werden. Gemäß einer Ausgestaltung nach Anspruch 2 kann das Halteelement jedoch auch in einem unverschiebbar gehaltenen Gehäuse vertikal geführt sein.

Bei der Vorrichtung nach Anspruch 1 wird durch die stufenlose Anpassung des beschliffenen Teils an die vertikale Auslenkung des Pantographen ein verbesserter Kontakt des beschliffenen Teils mit dem Schleifstück des Pantographen erreicht. An dem beschliffenen Teil auftretende Schwingungen, die durch Resonanzen des Systems Fahrleitung-Pantograph bzw. durch Resonanzen des Systems Deckenstromschiene-Pantograph und durch Unebenheiten im Schleifstück des Pantographen entstehen können, sowie ein daraus resultierendes unerwünschtes Springen des Pantographen werden durch das Federelement reduziert. Damit wird auch die dabei auftretende Funkenbildung verringert, so daß bei einer Vorrichtung gemäß Anspruch 1 der elektrische Abrieb am Fahrdrahtspiegel, das ist die Fläche an welcher der Pantograph entlang gleitet, reduziert wird. Die erfindungsgemäße Vorrichtung ist somit auch besonders gut zur abgefederten Aufhängung von Deckenstromschienen geeignet.

Die erfindungsgemäße Vorrichtung kann durch die Wahl wenigstens eines auf den jeweiligen Anwendungsfall abgestimmten Federelementes auf einfache Weise optimal an unterschiedliche Verwendungszwecke bzw. Einsatzbedingungen angepaßt werden.

Bei einer Ausgestaltung der Erfindung gemäß Anspruch 4 wird die stufenlose Anpassung des beschliffenen Teils an die vertikale Lage des Schleifstückes des Pantographen durch ein zusätzliches Dämpfungselement nochmals verbessert.

Durch das zusätzliche Dämpfungselement bewegt sich das beschliffene Teil gedämpft nach oben sowie schnell und ohne nachzuschwingen nach unten. Durch die gedämpfte und nachschwingungsfreie Bewegung des beschliffenen Teils ist.bei Doppeltraktion sichergestellt, daß das beschliffene Teil bereits wieder ruht, wenn der zweite Pantograph dieses Teil befährt.

Das Dämpfungselement bzw. die Dämpfungselemente können hierbei parallel und/oder in Reihe zum Federelement bzw. zu den Federelementen angeordnet sein.

Gemäß einer Ausgestaltung nach Anspruch 6 kann das Dämpfungselement und das Federelement als gemeinsames Feder-Dämpfungs-Element ausgebildet sein. Dies kann z.B. dadurch erreicht werden, daß als Federelement eine Feder mit einer entsprechenden Dämpfungscharakteristik gewählt wird.

Weitere Vorteile und Einzelheiten der Erfindung ergeben sich aus der nachfolgenden Beschreibung eines Ausführungsbeispiels anhand der Zeichnung und in Verbindung mit den weiteren Ansprüchen. Es zeigen:
- FIG 1: eine Seitenansicht einer erfindungsgemäßen Vorrichtung,
- FIG 2: einen Querschnitt durch die erfindungsgemäße Vorrichtung nach FIG 1.

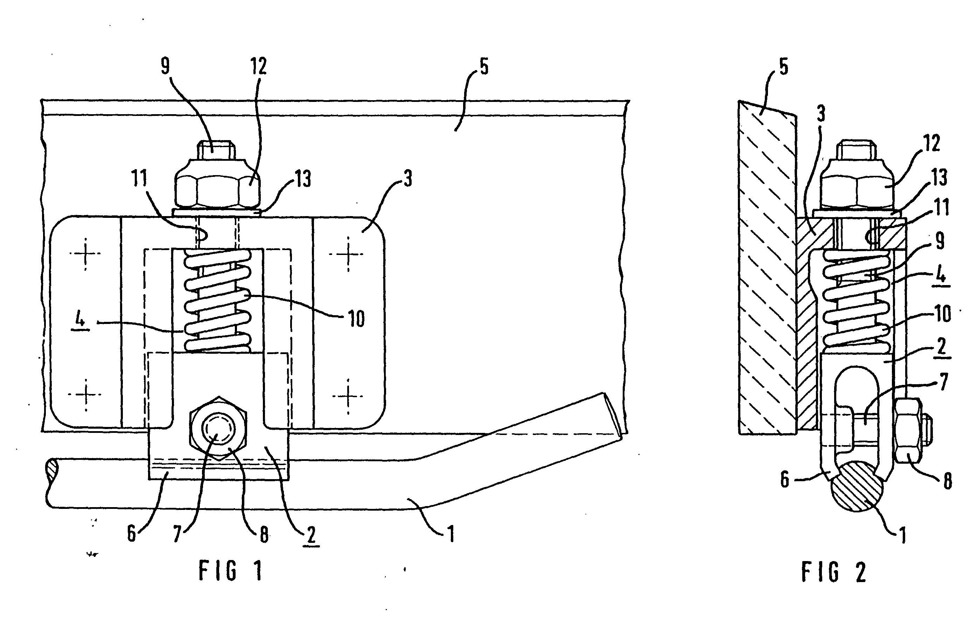

In den FIG 1 und 2 ist mit 1 ein Teil bezeichnet, daß von einem nicht dargestellten Stromabnehmer beschliffen wird. Das beschliffene Teil 1 - im gezeigten Ausführungsbeispiel eine Leitkufe eines Streckentrenners - ist in einem Halteelement 2 befestigt. Die Leitkufe 1 ist aus Fahrdraht gefertigt. Das Halteelement 2 ist deshalb als Klemme ausgebildet. Die Klemme 2 ist gemäß einer vorteilhaften Ausführungsform in einem Gehäuse 3 vertikal geführt und durch ein Federelement 4, das in der vorliegenden Ausgestaltung im Gehäuse 3 angeordnet ist, in seiner Bewegung abgefedert. Im gezeigten Ausführungsbeispiel ist das Federelement 4 als Feder-Dampfungs-Element ausgebildet und dient so zur gleichzeitigen Dämpfung der vom Halteelement 2 ausgeführten Bewegungen.

Das Gehäuse 3 ist im dargestellten Fall am Isolierstück 5 des Streckentrenners festgeschraubt und damit unverschiebbar an diesem gehalten.

Im vorliegenden Ausführungsbeispiel umfaßt die Klemme 2 einen Klemmbügel 6 zum Fassen des Fahrdrahtes 1 sowie einen quer zum Klemmbügel 6 angeordneten Gewindestift 7 mit wenigstens einer Spannmutter 8.

Das Federelement 4 umfaßt einen Gewindestift 9, der mit seinem einen Ende an der der Leitkufe 1 abgewandten Seite mit dem Klemmbügel 6 kraftschlüssig verbunden ist. Auf den Gewindestift 9 ist eine Schraubenfeder 10 aufgesteckt. Der Gewindestift 9 ist weiterhin mit seinem anderen Ende durch eine Durchgangsbohrung 11 im Gehäuse 3 durchgeführt. Auf das aus dem Gehäuse 3 herausragende Teil des Gewindestiftes 9 ist eine Einstellmutter 12 aufgeschraubt, wobei eine Beilagscheibe 13 zwischen dem Gehäuse 3 und der Einstellmutter 12 angeordnet ist.

Durch die Einstellmutter 12 ist die Leitkufe 1 auf einfache Weise in ihrer horizontalen Lage an einem bestehenden Fahrdraht bzw. an eine bestehende Stromschiene anpaßbar. Die Dämpfungscharakteristik und die Federungseigenschaften der Schraubenfeder 10 ändern sich hierbei nicht, da die Federkonstante der Schraubenfeder 10 in diesem Einstellbereich konstant ist.

## Patentansprüche

1. Vorrichtung zur Halterung eines von einem Stromabnehmer beschliffenen Teils einer Fahrleitungsanlage, das mit einem Halteelement (2) in Verbindung steht, welches durch wenigstens ein Federelement (4) in seiner Bewegung abgefedert ist, **dadurch gekennzeichnet, dass** das beschliffene Teil starr mit dem Halteelement (2) verbunden ist, das in einem Gehäuse (3) nur in vertikaler Richtung beweglich geführt ist.

2. Vorrichtung nach Anspruch 2, **dadurch gekennzeichnet, daß** das Federelement (4) im Gehäuse (3) angeordnet ist.

3. Vorrichtung nach Anspruch 1, **dadurch gekennzeichnet, daß** die Bewegung des Halteelements (2) durch wenigstens ein Dämpfungselement gedämpft ist.

4. Vorrichtung nach Anspruch 2 und 4, **dadurch gekennzeichnet, daß** das Dämpfungselement im Gehäuse (3) angeordnet ist.

5. Vorrichtung nach Anspruch 4, **dadurch gekennzeichnet, daß** das Dämpfungselement und das Federelement (4) als gemeinsames Feder-Dampfungs-Element ausgebildet sind.

6. Vorrichtung nach Anspruch 1, **dadurch gekennzeichnet, daß** das Halteelement (2) als Klemme zur Halterung eines Fahrdrahtes (1) ausgebildet ist.

7. Vorrichtung nach Anspruch 7, **dadurch gekennzeichnet, daß** die Klemme (2) einen Klemmbügel (6) zum Fassen des Fahrdrahtes (1) sowie einen quer zum Klemmbügel (6) angeordneten Gewindestift (7) mit wenigstens einer Spannmutter (8) umfaßt.

## Claims

1. Device for supporting a portion of an overhead contact system over which a current collector slides and which is connected to a holding element (2) whose movement is spring-loaded by means of at least one spring element (4), **characterised in that** the portion over which the current collector slides is rigidly connected to the holding element (2) which is guided in a housing (3) so that it is movable only in a vertical direction.

2. Device according to claim 2, **characterised in that** the spring element (4) is arranged in the housing (3).

3. Device according to claim 1, **characterised in that** the movement of the holding element (2) is damped by means of at least one damping element.

4. Device according to claim 2 and 4, **characterised in that** the damping element is arranged in the housing (3).

5. Device according to claim 4, **characterised in that** the damping element and the spring element (4) are formed as a common spring-damping element.

6. Device according to claim 1, **characterised in that** the holding element (2) is formed as a clamp for holding a contact wire (1).

7. Device according to claim 7, **characterised in that** the clamp (2) comprises a clamping clip (6) for gripping the contact wire (1) and also a threaded pin (7) which is arranged transversely in relation to the clamping clip (6) and has at least one tensioning nut (8).

## Revendications

1. Dispositif d'attache d'une partie d'installation d'alimentation aérienne de véhicule en contact avec un collecteur de courant, qui est reliée à un élément (2) de maintien, lequel est monté à suspension dans son mouvement par un élément (4) élastique, **caractérisé en ce que** la partie en contact est reliée rigidement à l'élément (2) de maintien qui est guidé dans un boîtier (3) de manière à ne pouvoir se mouvoir qu'en direction verticale.

2. Dispositif suivant la revendication 1, **caractérisé en ce que** l'élément (4) élastique est monté dans le boîtier (3).

3. Dispositif suivant la revendication 1, **caractérisé en ce que** le mouvement de l'élément (2) de maintien est amorti par au moins un élément d'amortissement.

4. Dispositif suivant la revendication 2 et 3, **caractérisé en ce que** l'élément d'amortissement est disposé dans le boîtier (3).

5. Dispositif suivant la revendication 4, **caractérisé en ce que** l'élément d'amortissement et l'élément (4) élastique sont constitués sous la forme d'un élément commun servant d'élément élastique et d'élément d'amortissement.

6. Dispositif suivant la revendication 1, **caractérisé en ce que** l'élément (2) de maintien est constitué sous la forme d'une pince de fixation d'un fil de contact (1).

7. Dispositif suivant la revendication 6, **caractérisé en ce que** la pince (2) comprend un étrier (6) de pince destiné à pincer le fil (1) de contact ainsi qu'une tige (7) filetée qui est disposée transversalement à l'étrier (6) de serrage et qui a au moins un écrou (8) de blocage.
